# EUROPEAN PATENT APPLICATION

(11) **EP 2 631 324 A1**
(43) Date of publication of application: **28.08.2013**
(21) Application number: 11834356.5
(22) Date of filing: 18.10.2011
(51) Int. Cl.: C23C 4/08, C22C 19/05, C23C 4/10, F01D 5/28, F01D 25/00, F02C 7/00

(54) **NI-BASED SUPERALLOY MEMBER HAVING HEAT-RESISTANT BOND COAT LAYER FORMED THEREIN**

(30) Priority: 19.10.2010 JP 2010234139
(71) Applicant: National Institute for Materials Science, Tsukuba-shi, Ibaraki 305-0047 (JP)
(72) Inventor: KAWAGISHI Kyoko, Tsukuba-shi Ibaraki 305-0047 (JP); MATSUMOTO Kazuhide, Tsukuba-shi Ibaraki 305-0047 (JP); HARADA Hiroshi, Tsukuba-shi Ibaraki 305-0047 (JP)
(74) Representative: Calamita, Roberto
(86) International application number: PCT/JP2011/073949
(87) International publication number: WO 2012/053517

(57) **Abstract**

Provided is an Ni-based superalloy component having a three-layer configuration of an Ni-based superalloy substrate, a bond coat layer and a top coat layer, wherein the alloy material of the bond coat layer has a composition including Co of at most 15.0% by mass, Cr of from 0.1 % by mass to 7.5% by mass, Mo of at most 3.0% by mass, W of from 4.1 % by mass to 10.0% by mass, Al of from 6.0% by mass to 10.0% by mass, Ti of at most 2.0% by mass, Ta of from 5.0% by mass to 15.0% by mass, Hf of at most 1.5% by mass, Y of at most 1.0% by mass, Nb of at most 2.0% by mass and Si of at most 2.0% by mass with a balance of Ni and inevitable impurities, and the Ni-based superalloy substrate has a composition including Al of from 1.0% by mass to 10.0% by mass, Ta of from 0% by mass to 14.0% by mass, Mo of from 0% by mass to 10.0% by mass, W of from 0% by mass to 15.0% by mass, Re of from 0% by mass to 10.0% by mass, Hf of from 0% by mass to 3.0% by mass, Cr of from 0% by mass to 20.0% by mass, Co of from 0% by mass to 20% by mass, Ru of from 0% by mass to 14.0% by mass, Nb of from 0% by mass to 4.0% by mass, Ti of from 0% by mass to 4.0% by mass and Si of from 0% by mass to 2.0% by mass with a balance of Ni and inevitable impurities. The Ni-based superalloy component has the heat-resistant bond coat layer formed therein and is extremely excellent in environmental characteristics such as oxidation resistance and high-temperature corrosion resistance, especially having a long heat cycle life, and is favorable for turbine blades and vanes.

## Description

### Technical Field

The present invention relates to an Ni-based superalloy component having a heat-resistant bond coat layer formed therein. Concretely, the invention provides an Ni-based superalloy component having a heat-resistant bond coat layer formed therein, which is for use for turbine rotor vanes or turbine stator vanes for jet engines, industrial gas turbines and others under high-temperature and high-stress conditions, and which improves the environmental characteristics such as oxidation resistance, high-temperature corrosion resistance and the like of components and dramatically prolongs the thermal cycle life thereof, which, however, has theretofore been especially difficult to prolong in conventional arts.

### Background Art

Heretofore, as substrates for turbine rotor blades or turbine stator vanes for jet engines, industrial gas turbines and others, Ni-based superalloys have been developed, of which the serviceable temperature has been improved. For further enhancing the durability of those heat-resistant components such as turbine rotor blades, turbine stator vanes and others, ceramic thermal barrier coating has been heretofore employed widely. For enhancing the adhesiveness of a thermal barrier coat material to Ni-based superalloy-made jet engine parts and for prolonging the life of those parts, various types of bond coat materials having high oxidation resistance have been taken into consideration, which are applied between the Ni-based superalloy substrate and the ceramic thermal barrier coat material. As those bond coat materials, mainly Al (aluminium)-containing alloys are used widely. For example, there are mentioned Ni or Co aluminide, MCrAlY (M: at least one of Ni, Co and Fe), and further platina aluminide and others (see the following Patent References 1 to 3).

However, when these bond coat materials are applied to Ni-based superalloy turbine vanes and when the turbine vanes are used at a high temperature for a long period of time, then mutual diffusion of elements may go on via the near-interface between the Ni-based superalloy substrate and the bond coat material and/or via the near-interface between the ceramic thermal barrier coat material and the bond coat material, and owing to the mutual diffusion of elements, the Ni-based superalloy material may be deteriorated, thereby providing some problems of material technology in point of durability reduction of turbine vanes themselves including strength reduction as well as environment resistance reduction of the bond coat material. In particular, recently, the gas temperature in jet engines and gas turbines becomes higher, and naturally the temperature of turbine blades and vanes rises whereby the diffusion phenomenon may be much more accelerated. High-pressure turbine blades have a hollow structure for cooling, but their wall thickness is being reduced in the art, and therefore, the influence of the diffusion region brings about much more serious technical problems.

For retarding the mutual diffusion of elements through the near-interface of Ni-based superalloy substrate/bond coat material, a diffusion barrier coating with a special alloy layer formed therein has been investigated; however, cases that could not always sufficiently attain the object of diffusion barrier coating are not negligible (see the following Patent Reference 4).

Ralph J. Hecht et al. and Edward Harvey Goldman et al. proposed bond coat materials having alloy compositions differing from those of Ni or Co aluminide, MCrAlY and others heretofore widely used in the art, and asserted the improvements thereof; however, it could not be said that their bond coat materials could fully fulfill the severe heat-resistant serviceable conditions required at present (see the following Patent References 5 and 6).

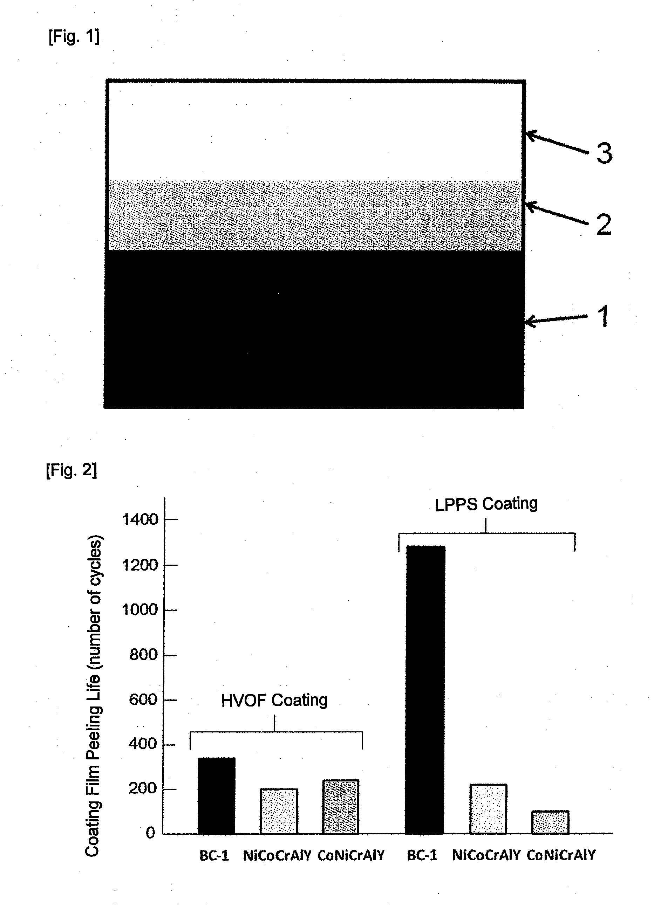

Fig. 1 shows a cross-sectional view of a configuration example of a heat-resistant gas turbine component using an Ni-based superalloy as the substrate thereof. For increasing the heat resistance of the Ni-based superalloy substrate (1), in general, the surface of the substrate is coated with a ceramic thermal barrier coat layer (3), however, the long-term adhesive property of the interface between the Ni-based superalloy substrate and the ceramic thermal barrier coat layer is insufficient, and therefore various coat materials are sued as the bond coat material (2). In general, at the near-interface between the Ni-based superalloy substrate and the bond coat layer, element diffusion occurs to form SRZ (secondary reaction zone) under high-temperature service conditions, and therefore at the near-interface of the bond coat layer adjacent to the ceramic thermal barrier coat layer, the ceramic coat layer peels owing to the formation of oxide film under high-temperature oxidation conditions. Consequently, the current state is that the life of Ni-based superalloy components in use at high temperatures could not always be said to be satisfactory.

### Citation List

### Patent References

[Patent Reference 1] Japanese Patent 4111555
[Patent Reference 2] JP-A 2008-156744
[Patent Reference 3] JP-A 2002-155380
[Patent Reference 4] Japanese Patent 3862774
[Patent Reference 5] JP-A 62-30037
[Patent Reference 6] JP-A 5-132751

### Summary of the Invention

### Problems that the Invention is to Solve

An object of the present invention is to provide a long-life Ni-based superalloy component by preventing the formation of SRZ (secondary reaction zone) to occur in the near-interface between an Ni-based superalloy substrate and a bond coat layer and by improving the adhesiveness at the interface between a ceramic thermal barrier coat layer and a bond coat layer.

### Means for Solving the Problems

The present inventors have assiduously studied bond coat materials that enable diffusion barrier coating for wide-range Ni-based superalloy substrates, and have succeeded in developing a bond coat material having an extremely excellent property as compared with Ni or Co aluminide, MCrAlY or the like heretofore widely used in the art, by optimizing the alloy composition of the bond coat material, and in developing an Ni-based superalloy component with a layer of the heat-resistant bond coat material formed therein.

The first improvement attained by application of the bond coat material that the present invention proposes here is that the material has enabled retention of long-term heat-resistant characteristics by effectively preventing the formation of SRZ in the near-interface between an Ni-based heat-resistant alloy substrate and a bond coat layer which has heretofore been considered to be uncontrollable. The second improvement is that the invention has made it possible to form a homogeneous and dense oxide layer in the near-interface of the bond coat layer adjacent to the ceramic thermal barrier layer to thereby significantly enhance the stability and the adhesiveness of the oxide layer. Accordingly, the invention has made it possible to dramatically prolong the heat cycle life (the time to be taken before occurrence of spallation of ceramic thermal barrier coat) as compared with conventional coating methods. In a high-temperature oxidation atmosphere, the bond coat material of the invention forms a homogeneous, dense and stable oxide layer on the surface thereof, and therefore under not so much severe temperature conditions, even an Ni-based superalloy component not having the ceramic thermal barrier coat layer (3 in Fig. 1) can be used as a coat material having a relatively long life.

Specifically, as a means for solving the above-mentioned problems, the present invention provides, as the first aspect thereof, an Ni-based superalloy component having a three-layer configuration of an Ni-based superalloy substrate, a bond coat layer and a heat-resistant ceramic top coat layer having a thermal barrier function, wherein the alloy material of the bond coat layer has a composition including Co of at most 15.0% by mass, Cr of from 0.1% by mass to 7.5% by mass, Mo of at most 3.0% by mass, W of from 4.1 % by mass to 10.0% by mass, Al of from 6.0% by mass to 10.0% by mass, Ti of at most 2.0% by mass, Ta of from 5.0% by mass to 15.0% by mass, Hf of at most 1.5% by mass, Y of at most 1.0% by mass, Nb of at most 2.0% by mass and Si of at most 2.0% by mass with a balance of Ni and inevitable impurities, and the Ni-based superalloy substrate has a composition including Al of from 1.0% by mass to 10.0% by mass, Ta of from 0% by mass to 14.0% by mass, Mo of from 0% by mass to 10.0% by mass, W of from 0% by mass to 15.0% by mass, Re of from 0% by mass to 10.0% by mass, Hf of from 0% by mass to 3.0% by mass, Cr of from 0% by mass to 20.0% by mass, Co of from 0% by mass to 20% by mass, Ru of from 0% by mass to 14.0% by mass, Nb of from 0% by mass to 4.0% by mass, Ti of from 0% by mass to 4.0% by mass and Si of from 0% by mass to 2.0% by mass with a balance of Ni and inevitable impurities.

As the second aspect, the invention provides the above-mentioned Ni-based superalloy component, wherein the alloy material of the bond coat layer has a composition including Co of at most 12.0% by mass, Cr of from 0.1 % by mass to 6.0% by mass, Mo of at most 3.0% by mass, W of from 4.1 % by mass to 9.0% by mass, Al of from 6.5% by mass to 9.5% by mass, Ti of at most 2.0% by mass, Ta of from 5.0% by mass to 15.0% by mass, Hf of at most 1.5% by mass, Y of from 0.01 % by mass to 1.0% by mass, Nb of at most 2.0% by mass and Si of at most 2.0% by mass with a balance of Ni and inevitable impurities, and the Ni-based superalloy substrate has a composition including Al of from 3.5% by mass to 7.0% by mass, Ta of 2.0% by mass to 12.0% by mass, Mo of from 0% by mass to 4.5% by mass, W of from 0% by mass to 10.0% by mass, Re of from 0% by mass to 10.0% by mass, Hf of from 0% by mass to 0.50% by mass, Cr of from 1.0% by mass to 15.0% by mass, Co of from 0% by mass to 16% by mass, Ru of from 0% by mass to 14.0% by mass, Nb of from 0% by mass to 2.0% by mass, Ti of from 0% by mass to 3.0% by mass and Si of from 0% by mass to 2.0% by mass with a balance of Ni and inevitable impurities.

As the third aspect, the invention provides the Ni-based superalloy substrate of the above-mentioned first aspect having a three-layer configuration of an Ni-based superalloy substrate, a bond coat layer and a heat-resistant ceramic top coat layer having a thermal barrier function, wherein the bond coat layer is formed according to a low-pressure plasma spraying method or a high-velocity oxygen fuel spraying method.

As the fourth aspect, the invention provides the Ni-based superalloy substrate of the above-mentioned second aspect having a three-layer configuration of an Ni-based superalloy substrate, a bond coat layer and a heat-resistant ceramic top coat layer having a thermal barrier function, wherein the bond coat layer is formed according to a low-pressure plasma spraying method or a high-velocity oxygen fuel spraying method.

As the fifth aspect, the invention provides the Ni-based superalloy substrate of the above-mentioned first aspect having a three-layer configuration of an Ni-based superalloy substrate, a bond coat layer and a heat-resistant ceramic top coat layer having a thermal barrier function, wherein the top layer includes a Zr oxide or a Hf oxide to which an oxide of a rare earth metal such as Y, La, Ga, Sm or the like or an Mg oxide is added.

As the sixth aspect, the invention provides the Ni-based superalloy substrate of the above-mentioned second aspect having a three-layer configuration of an Ni-based superalloy substrate, a bond coat layer and a heat-resistant ceramic top coat layer having a thermal barrier function, wherein the top layer includes a Zr oxide or an Hf oxide to which an oxide of a rare earth metal such as Y, La, Ga, Sm or the like or an Mg oxide is added.

As the seventh aspect, the invention provides the Ni-based superalloy substrate of the above-mentioned first aspect having a three-layer configuration of an Ni-based superalloy substrate, a bond coat layer and a heat-resistant ceramic top coat layer having a thermal barrier function, wherein the pore area of the bond coat layer is at most 5 µm² per 1000 µm².

As the eighth aspect, the invention provides the Ni-based superalloy substrate of the above-mentioned second aspect having a three-layer configuration of an Ni-based superalloy substrate, a bond coat layer and a heat-resistant ceramic top coat layer having a thermal barrier function, wherein the bond coat layer is formed according to a low-pressure plasma spraying method, and the pore area of the bond coat layer is at most 3 µm² per 1000 µm².

As the ninth aspect, the invention provides a heat-resistant gas turbine component that includes the Ni-based superalloy substrate of the above-mentioned eighth aspect having a three-layer configuration of an Ni-based superalloy substrate, a bond coat layer and a heat-resistant ceramic top coat layer having a thermal barrier function.

### Advantage of the Invention

The invention has made it possible to effectively prevent the formation of a secondary reaction layer SRZ (secondary reaction zone) to be caused by mutual diffusion of elements to occur between the bond coat material and the alloy substrate at the near-interface between an Ni-based heat-resistant alloy substrate and a bond coat layer even under a severe condition of a temperature of 1,100°C or higher in the air, which has heretofore been considered to be uncontrollable.

In the invention, in addition, a homogeneous and dense oxide layer is formed at the near-interface of the bond coat layer adjacent to the ceramic thermal barrier coat layer, and therefore the stability and the adhesiveness of the oxide layer can be greatly enhanced. Owing to the synergistic effect, the invention has made is possible to dramatically prolong the heat cycle life (the time to be taken before occurrence of spallation of ceramic thermal barrier coat) as compared with conventional coating methods.

### Brief Description of the Drawings

Fig. 1 is a cross-sectional view of a configuration model of a heat-resistant gas turbine component that uses an Ni-based superalloy component having a three-layer configuration of an Ni-based superalloy substrate (1), a bond coat layer (2) and a heat-resistant ceramic top coat layer (3) having a thermal barrier function.

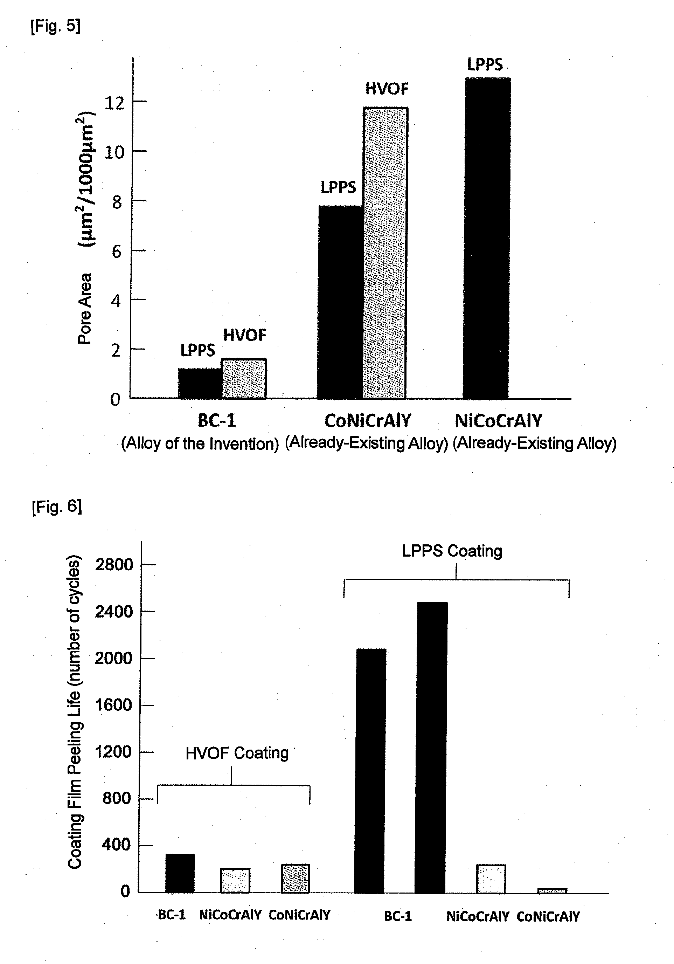

Fig. 2 is a graph for comparing the cycle life before coating film spallation of the top coat layer (3) occurs in a heat cycle test of the above-mentioned, three-layer configuration-having Ni-based superalloy component (test of heating the sample at 1135°C for 1 hour and then keeping it at room temperature for 1 hour as one cycle, and the cycle is repeated). Six cases are compared, which differ in the type of the bond coat material and in the coating method. The fourth bar graph having a height of 1300 from the left shows that <Example 1L>, in which the "BC-1" bond coat material in [Table 1] was formed into a bond coat layer according to a low-pressure plasma spraying method, did not undergo coating film spallation in the first-try experiment of up to 1300 cycles. (The results of the subsequent experiment are shown in Fig. 6.)

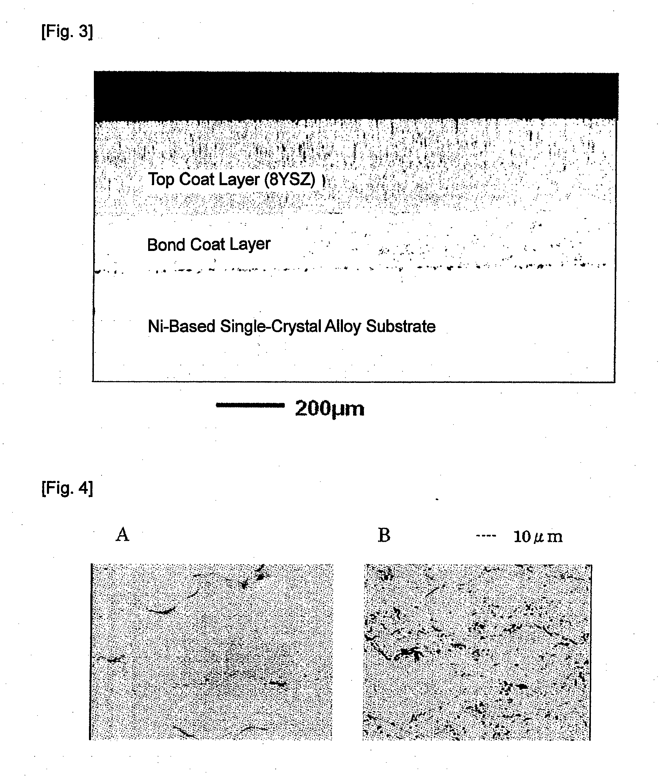

Fig. 3 is a micrograph of the cross section of an Ni-based superalloy component having a three-layer configuration of an Ni-based superalloy substrate coated with a bond coat layer and further coated with a ceramic top coat layer. (<Example 1L>) (The black part at the top of the photograph is the background in taking the picture. "8YSZ" means that the ceramic top coat layer is formed of a Zr oxide stabilized by incorporation of 8 wt.% Y oxide thereinto.)
Fig: 4 shows micrographs of cross sections for comparing the degree of pore distribution in the bond coat layer formed by coating with the bond coat material of the invention according to different coating methods: (A) a low-pressure plasma spraying (LPPS) method or (B) a high-velocity oxygen fuel (HVOF) spraying method.
Fig. 5 is a graph for comparing the pore area ratio of the bond coat layer formed on an Ni-based superalloy substrate using different bond coat materials according to different coating methods.
Fig. 6 is a graph for comparing the cycle life before coating film spallation of the top coat layer (3) occurs in a heat cycle test of the three-layer configuration-having Ni-based superalloy component shown in Fig. 1 (test of heating the sample at 1135°C for 1 hour and then keeping it at room temperature for 1 hour as one cycle, and the cycle is repeated). This shows the results of the subsequent experiment after the test in Fig. 2. The fifth bar graph having a height of 2444 from the left shows that one sample of <Example 1 L>, in which the "BC-1" bond coat material in [Table 1] was formed into a bond coat layer according to a low-pressure plasma spraying method, underwent coating film spallation after the life of 2444 cycles. The fourth bar graph having a height of 2098 from the left shows that another sample of <Example 1 L>, in which the "BC-1" bond coat material in [Table 1] was formed into a bond coat layer according to a low-pressure plasma spraying method, underwent coating film spallation after the life of 2098 cycles.

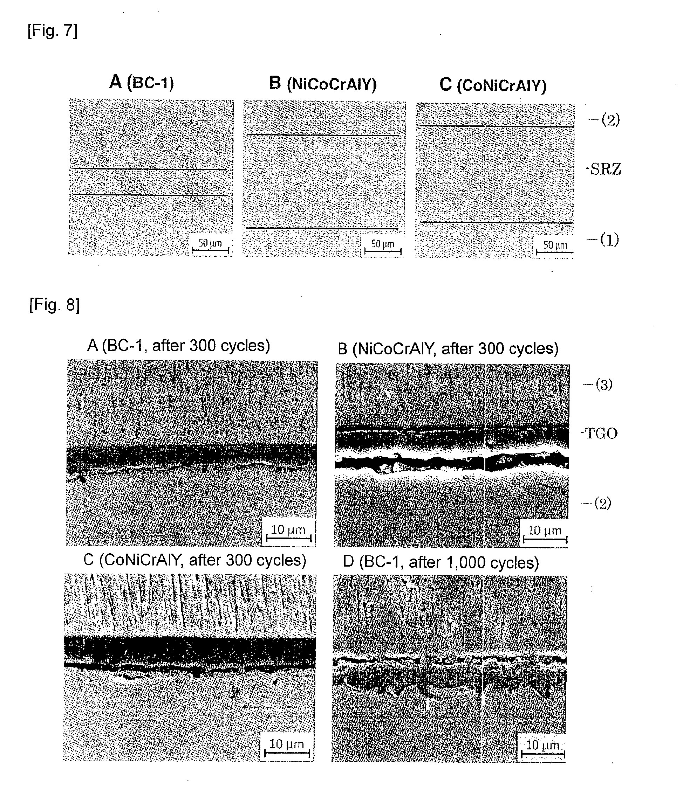

Fig. 7 shows enlarged SEM photographs of the region of substrate (1)/SRZ/bond coat layer (2) of cross sections of three-layer configuration-having Ni-based alloy component samples after 300 cycles of the heat cycle test. <Example 1 L> is compared with Comparative Examples in point of the thickness of the secondary reaction layer (SRZ) (layer sandwiched between two lines at the center of each drawing) formed in the interfacial boundary between the Ni-based superalloy substrate (1) (bottom layer in each drawing) and the bond coat layer (2) (top layer in each drawing).
Fig. 8 shows enlarged SEM photographs of the region of bond coat layer (2)/TGO (thermally-grown oxide)/top coat layer (3) of cross sections of three-layer configuration-having Ni-based alloy component samples after 300 cycles of the heat cycle test. As compared with <Example 1 L> [Photograph 8A], Comparative Examples [Photograph 8B] and [Photograph 8C] have a space formed between the dark TGO (thermally-grown oxide) and the bond coat layer (2). [Photograph 8D] is an enlarged SEM photograph of the same region as in <Example 1 L> but after 1000 cycles of the heat cycle test. In this, it is confirmed that TGO (thermally-grown oxide) further grew to have wedge-shaped oxides stepping in the bond coat layer (2).

### Mode for Carrying out the Invention

The bond coat material and the Ni-based superalloy component having, as formed therein, a heat-resistant bond coat layer using the bond coat material, which the invention proposes here, effectively inhibit the formation of SRZ (secondary reaction zone) at the near-interface between the Ni-based heat-resistant alloy substrate and the bond coat layer, which has heretofore been considered to be uncontrollable, and in addition, they form a homogeneous and dense oxide layer (TGO, thermally-grown oxide) in the near-interface of the bond coat layer adjacent to the ceramic thermal barrier coat layer to thereby greatly enhance the stability and the adhesiveness of the oxide layer, and accordingly, as compared with conventional coating methods, the invention enables a great improvement of the heat cycle life of the heat-resistant bond coat layer-having, Ni-based superalloy component.

The bond coat material that the invention proposes here is widely applicable to first to third generation Ni-based single-crystal superalloys generally used in the art, and also to fourth and fifth generation Ni-based single-crystal superalloys which contain Re (rhenium) and Ru (ruthenium) and which have become actively developed these days. Preferred Ni-based single-crystal superalloys include, for example, alloys including Al of from 1.0% by mass to 10.0% by mass, Ta of from 0% by mass to 14.0% by mass, Mo of from 0% by mass to 10.0% by mass, W of from 0% by mass to 15.0% by mass, Re of from 0% by mass to 10.0% by mass, Hf of from 0% by mass to 3.0% by mass, Cr of from 0% by mass to 20.0% by mass, Co of from 0% by mass to 20% by mass, Ru of from 0% by mass to 14.0% by mass, Nb of from 0% by mass to 4.0% by mass, Ti of from 0% by mass to 4.0% by mass and Si of from 0% by mass to from 2.0% by mass with a balance of Ni and inevitable impurities; and more preferred are alloys including Al of from 3.5% by mass to 7.0% by mass, Ta of from 2.0% by mass to 12.0% by mass, Mo of from 0% by mass to 4.5% by mass, W of from 0% by mass to 10.0% by mass, Re of from 0% by mass to 10.0% by mass, Hf of from 0% by mass to 0.50% by mass, Cr of from 1.0% by mass to 15.0% by mass, Co of from 0% by mass to 16% by mass, Ru of from 0% by mass to 14.0% by mass, Nb of from 0% by mass to 2.0% by mass, Ti of from 0% by mass to 3.0% by mass and Si of from 0% by mass to from 2.0% by mass with a balance of Ni and inevitable impurities

The invention provides an Ni-based superalloy component having a three-layer configuration of an Ni-based superalloy substrate, a bond coat layer and a top coat layer, wherein the alloy material of the bond coat layer has a composition including Co of at most 15.0% by mass, Cr of from 0.1 % by mass to 7.5% by mass, Mo of at most 3.0% by mass, W of from 4.1% by mass to 10.0% by mass, Al of from 6.0% by mass to 10.0% by mass, Ti of at most 2.0% by mass, Ta of from 5.0% by mass to 15.0% by mass, Hf of at most 1.5% by mass, Y of at most 1.0% by mass, Nb of at most 2.0% by mass and Si of at most 2.0% by mass with a balance of Ni and inevitable impurities, more preferably including Co of at most 12.0% by mass, Cr of from 0.1% by mass to 6.0% by mass, Mo of at most 3.0% by mass, W of from 4.1 % by mass to 9.0% by mass, Al of from 6.5% by mass to 9.5% by mass, Ti of at most 2.0% by mass, Ta of from 5.0% by mass to 15.0% by mass, Hf of at most 1.5% by mass, Y of from 0.01 % by mass to 1.0% by mass, Nb of at most 2.0% by mass and Si of at most 2.0% by mass with a balance of Ni and inevitable impurities.

Examples of a typical alloy of MCrAlY that is a bond coat material most popularly used at present include a composition including, as % by mass, Co of about 21.5%, Cr of about 17%, Al of about 12.4%, Y of about 0.7% and a balance of Ni and inevitable impurities, and a composition including Co of about 38.5%, Cr of about 21 %, Al of about 8%, Y of about 0.5% and a balance of Ni and inevitable impurities.

The alloy composition of the bond coat material of the invention significantly differs from the composition of those already-existing materials, and using the bond coat material that has the alloy composition optimized as indicated in the invention can attain the excellent life prolongation even under any severe high-temperature service conditions.

The coating method with a bond coat material is not limited to any specific technique, but any of a plasma spraying method, a high-velocity oxygen fuel spraying method, an ion plating method, an EB-PVD method, a CVD method and others generally used in the art are usable here.

Above all, preferred is a coating process using a low-pressure plasma spraying method (LPPS) or a high-velocity oxygen fuel spraying method (HVOF).

The bond coat material of the invention can form a dense coating layer with few pores according to any coating method mentioned above, by optimizing the coating condition therein. In particular, the low-pressure plasma spraying method (LPPS) is a preferred coating method, in which the bond coat layer formed has few pores and the degree of oxidation of the bond coat layer is low.

The pore density of the bond coat layer is an important parameter that influences the long-term coating film spallation life under high-temperature conditions, and varies depending on the bond coat material and the bond coating condition, etc. For prolonging the coating film spallation life at high temperatures, the pore area is preferably at most 5 µm², more preferably at most 3 µm² per 1000 µm², as a scale of pore density in the bond coat layer. The thickness of the bond coat layer may be from 10 to 500 µm, preferably from 20 to 400 µm.

The material of the ceramic thermal barrier coat layer is not limited to specific ceramics but any ceramic materials recognized to have a thermal barrier effect can be used here. One typical example is partially-stabilized zirconia (zirconium oxide), and for preventing cracking owing to expansion/contraction through phase transformation, at least one of a rare earth oxide such as yttrium oxide, cerium oxide or the like, or magnesium oxide may be added thereto for partial or complete stabilization thereof, and the thus-stabilized one is preferred for use herein. In particular, partially-stabilized zirconia containing from 7 to 8% by mass of yttrium oxide is widely used as an excellent heat-resistant ceramic material, and can be used for coating according to an EB-PVD method, a spraying method or the like coating method.
The Ni-based superalloy substrate with a heat-resistant bond coat layer formed thereon of the invention is described with reference to Examples given below.

### Examples

Next, the advantages of the invention are described with reference to Examples given below.

**[Table 1]**

| Bond Coat Material | Alloying Element (% by mass) | | | | | | | | | |
|---|---|---|---|---|---|---|---|---|---|---|
| | Co | Cr | Mo | W | Al | Ta | Ti | Hf | Y | Ni |
| BC-1 | 6.1 | 3.7 | 1.0 | 4.8 | 8.1 | 9.2 | - | 0.3 | 0.1 | balance |
| BC-2 | 4.7 | 1.4 | 0.9 | 7.2 | 7.9 | 9.5 | 0.7 | 0.16 | 0.5 | balance |
| BC-3 | 9.6 | 1.4 | 1.0 | 6.1 | 8.9 | 6.3 | - | 0.1 | 0.1 | balance |
| BC-4 | 4.5 | 1.6 | 1.6 | 5.6 | 8.3 | 8.5 | - | 0.15 | 0.1 | balance |
| BC-5 | - | 3.6 | - | 5.6 | 7.7 | 13.8 | - | - | 0.2 | balance |
| BC-6 | 3.2 | 5.3 | 0.3 | 6.3 | 8.1 | 8.5 | 1.3 | - | 0.2 | balance |
| BC-7 | 7.2 | 2.8 | 0.3 | 5.5 | 7.9 | 9.5 | 1.4 | 0.15 | 0.2 | balance |
| CoNiCrAlY | 38.5 | 21.0 | - | - | 8.0 | - | - | - | 0.5 | balance |
| (already-existing alloy A) | | | | | | | | | | |
| NiCoCrAlY | 21.5 | 17.0 | - | - | 12.4 | - | - | - | 0.7 | balance |
| (already-existing alloy B) | | | | | | | | | | |

### <Example 1 H>

Using an ingot of BC-1 alloy as the bond coat material of the invention shown in [Table 1], a metal powder for coating was prepared, and then a bond coat layer (2) (thickness: about 150 µm) was formed on the Ni-based single-crystal alloy substrate (1). The composition of the Ni-based single-crystal alloy substrate (1) used here includes Al of 5.9% by mass, Ta of 5.9% by mass, Mo of 2.9% by mass, W of 5.9% by mass, Re of 5.8% by mass, Hf of 0.1 % by mass, Cr of 2.9% by mass, Co of 5.8% by mass and Ru of 3.5% by mass with a balance of Ni and inevitable impurities.

As the method of applying the above-mentioned bond coat material onto the Ni-based single-crystal alloy substrate (1) having a diameter of 10 mm and a thickness of 5 mm, used was a high-velocity oxygen fuel method (HVOF method). The spraying conditions for the HVOF method were: substrate temperature of 130°C, kerosene as fuel of 20.8 Uhr, oxygen of 898 Umin, nitrogen as carrier gas of 2 L/min.

Before forming the thermal barrier ceramic layer (3) to be the top coat layer, the surface of the bond coat layer (2) formed by bond coating on the Ni-based single-crystal alloy substrate was polished with alumina, and further pre-oxidized in an EB-PVD apparatus. Subsequently, using yttrium oxide-partially stabilized zirconia as the material thereof, the top coat layer was formed. The film formation was under the control of oxygen flow rate at a substrate temperature of 930°C and under a pressure of 0.2 Pa. The thickness of the top coat layer was about 200 µm. Fig. 3 shows a microstructure photograph of the cross section of the three-layered sample produced here, having, as formed on the Ni-based single-crystal alloy substrate (1), the bond coat layer (BC-1) (2) and further the top coat layer (3) thereon.

### <Example 1 L>

Using the BC-1 alloy as the bond coat material of the invention shown in [Table 1], a bond coat layer (2) (thickness: about 150 µm) was formed on the Ni-based single-crystal alloy substrate (1). The composition of the Ni-based single-crystal alloy substrate (1) used, the composition of the top coat layer and the three-layer configuration ratio were the same as in

### <Example 1 H>.

As the method of applying the bond coat material onto the Ni-based single-crystal alloy substrate (1) having a diameter of 10 mm and a thickness of 5 mm, used was a low-pressure plasma spraying method (LPPS method). The spraying conditions for the LPPS method were: substrate preheating temperature of 600°C, argon of 45 L/min with hydrogen of 8 L/min as plasma gas, and argon of 2 L/min as carrier gas.

### <Comparative Example 1 H>

Using a bond coat material of an already-existing alloy, CoNiCrAlY alloy as a typical case of Comparative Examples shown in [Table 1], a bond coat layer (2) (thickness: about 150 µm) was formed on the Ni-based single-crystal alloy substrate (1). The composition of the Ni-based single-crystal alloy substrate (1) used, the composition of the top coat layer, the three-layer configuration ratio, and the coating condition in the high-velocity oxygen fuel method (HVOF method) with the bond coat material were the same as in <Example 1 H>.

### <Comparative Example 1 L>

Using a bond coat material of an already-existing alloy, CoNiCrAlY alloy as a typical case of Comparative Examples shown in [Table 1], a bond coat layer (2) (thickness: about 150 µm) was formed on the Ni-based single-crystal alloy substrate (1). The composition of the Ni-based single-crystal alloy substrate (1) used, the composition of the top coat layer, the three-layer configuration ratio, and the coating condition in the low-pressure plasma spraying method (LPPS method) with the bond coat material were the same as in <Example 1 L>.

### <Comparative Example 2H>

Using a bond coat material of an already-existing alloy, NiCoCrAlY alloy as a typical case of Comparative Examples shown in [Table 1], a bond coat layer (2) (thickness: about 150 µm) was formed on the Ni-based single-crystal alloy substrate (1). The composition of the Ni-based single-crystal alloy substrate (1) used, the composition of the top coat layer, the three-layer configuration ratio, and the coating condition in the high-velocity oxygen fuel method (HVOF method) with the bond coat material were the same as in <Example 1 H>.

### <Comparative Example 2L>

Using a bond coat material of an already-existing alloy, NiCoCrAlY alloy as a typical case of Comparative Examples shown in [Table 1], a bond coat layer (2) (thickness: about 150 µm) was formed on the Ni-based single-crystal alloy substrate (1). The composition of the Ni-based single-crystal alloy substrate (1) used, the composition of the top coat layer, the three-layer configuration ratio, and the coating condition in the low-pressure plasma spraying method (LPPS method) with the bond coat material were the same as in <Example 1 L>.
Each of the six samples produced by the combination the three types of bond coating materials and the two types of the bond coating methods (each sample obtained in each of <Example 1 H> to <Comparative Example 2L>) was tested in the heat cycle test, and the results are shown in [Fig. 2]. In the heat cycle test, an electric furnace was used. In one cycle, the sample was held in air at a holding temperature of 1135°C for 1 hour, then cooled, and held at room temperature for 1 hour. The spallation life indicates the number of cycles in which at least 50% of the top coat layer (3) exfoliated.

In any coating method, it is known that the samples having the bond coat layer formed of the bond coat material of the invention (BC-1) have a longer coating film spallation life than those using already-existing alloys (CoNiCrAlY, NiCoCrAlY) (Fig. 2). The coating methods were compared. It is known that, in general, the samples produced according to the low-pressure plasma spraying method (LPPS method) have a longer coating film spallation life than those produced according to the high-velocity oxygen fuel method (HVOF method). However, the three-layered component sample using the already-existing alloy CoNiCrAlY for the bond coat layer produced according to the HVOF method was better (see Fig. 2, Fig. 6).
In the case where the bond coat material of the invention was applied to the substrate according to the low-pressure plasma spraying method (LPPS method), the coating film spallation life was dramatically prolonged (1300 cycles or more); and as compared with the case where already-existing alloy (CoNiCrAlY, NiCoCrAlY) was used, the case of the invention attained at least 5 times life prolongation.
In the graph of [Fig. 2], the fourth bar graph having a height of 1300 from the left shows that <Example 1L>, in which the "BC-1" bond coat material in [Table 1] was formed into the bond coat layer according to the low-pressure plasma spraying method, did not undergo coating film spallation in the first-try experiment of up to 1300 cycles. (The results of the subsequent experiment are shown in Fig. 6.)

### <Examples 2 to 6>

For the Ni-based single-crystal alloy substrate, prepared was an alloy with a composition including Al of 5.7% by mass, Ti of 0.9% by mass, Ta of 6.6% by mass, Mo of 0.7% by mass, W of 5.9% by mass, Re of 3.1 % by mass, Cr of 6.4% by mass, Co of 8.9% by mass, and a balance of Ni and inevitable impurities. A bond coat material of any of the five types of alloys of the invention (BC-2, 3, 4, 6, 7) shown in Table 1 was applied onto the Ni-based single-crystal alloy substrate according to a low-pressure plasma spraying method (LPPS method) to form a bond coat layer thereon, and then a top coat layer was formed thereon according to the same method as in the above. These are sequentially referred to as Example 2, Example 3, Example 4, Example 5 and Example 6.
These five types of three-layered samples were evaluated for the coating film spallation life according to the above-mentioned method. It was known that all the samples had a stable life of 500 cycles or more.

### <Example 7>

For the Ni-based single-crystal alloy substrate, prepared was an alloy with a composition including Al of 5.5% by mass, Ta of 10.0% by mass, Mo of 0.1% by mass, W of 7.9% by mass, Re of 0.4% by mass, Cr of 8.9% by mass, and a balance of Ni and inevitable impurities. A bond coat material of the alloy BC-5 of the invention shown in Table [1]] was applied onto the Ni-based single-crystal alloy substrate according to a low-pressure plasma spraying method (LPPS method) to form a bond coat layer thereon, and then a top coat layer was formed thereon according to the same method as in the above. The three-layered sample thus produced was evaluated for the coating film spallation life according to the above-mentioned method. It was known that the sample had a stable life of 500 cycles or more.
As given below, the above-mentioned Examples are enumerated in [Table 2] and the Comparative Examples are in [Table 3].

**[Table 2]**

| Example | ex.1H | ex.1L | ex.2 | ex.3 | ex.4 | ex.5 | ex.6 | ex.7 |
|---|---|---|---|---|---|---|---|---|
| Spallation Life | 350 | 1300- | 500- | 500- | 500- | 500- | 500- | 500- |
| Top Layer | YSZ | YSZ | YSZ | YSZ | YSZ | YSZ | YSZ | YSZ |
| Ni Bond Layer | | | | | | | | |
| Deposition Method | HVOF | LPPS | LPPS | LPPS | LPPS | LPPS | LPPS | LPPS |
| Pore Area Ratio | 0.002 | 0.001 | -- | -- | -- | -- | -- | -- |
| | (BC-1) | (BC-1) | (BC-2) | (BC-3) | (BC-4) | (BC-6) | (BC-7) | (BC-5) |
| Co | 6.1 | 6.1 | 4.7 | 9.6 | 4.5 | 3.2 | 7.2 | |
| Cr | 3.7 | 3.7 | 1.4 | 1.4 | 1.6 | 5.3 | 2.8 | 3.6 |
| Mo | 1.0 | 1.0 | 0.9 | 1.0 | 1.6 | 0.3 | 0.3 | |
| W | 4.8 | 4.8 | 7.2 | 6.1 | 5.6 | 6.3 | 5.5 | 5.6 |
| Al | 8.1 | 8.1 | 7.9 | 8.9 | 8.3 | 8.1 | 7.9 | 7.7 |
| Ti | | | 0.7 | | | 1.3 | 1.4 | |
| Ta | 9.2 | 9.2 | 9.5 | 6.3 | 8.5 | 8.5 | 9.5 | 13.8 |
| Hf | 0.3 | 0.3 | 0.16 | 0.1 | 0.15 | | 0.15 | |
| Y | 0.1 | 0.1 | 0.5 | 0.1 | 0.1 | 0.2 | 0.2 | 0.2 |
| Nb | | | | | | | | |
| Si | | | | | | | | |
| Ni | balance | balance | balance | balance | balance | balance | balance | balance |
| | | | | | | | | |
| Ni Substrate | | | | | | | | |
| Al | 5.9 | 5.9 | 5.7 | 5.7 | 5.7 | 5.7 | 5.7 | 5.5 |
| Ta | 5.9 | 5.9 | 6.6 | 6.6 | 6.6 | 6.6 | 6.6 | 10 |
| Mo | 2.9 | 2.9 | 0.7 | 0.7 | 0.7 | 0.7 | 0.7 | 0.1 |
| W | 5.9 | 5.9 | 5.9 | 5.9 | 5.9 | 5.9 | 5.9 | 7.9 |
| Re | 5.8 | 5.8 | 3.1 | 3.1 | 3.1 | 3.1 | 3.1 | 0.4 |
| Hf | 0.1 | 0.1 | | | | | | |
| Cr | 2.9 | 2.9 | 6.4 | 6.4 | 6.4 | 6.4 | 6.4 | 8.9 |
| Co | 5.8 | 5.8 | 8.9 | 8.9 | 8.9 | 8.9 | 8.9 | |
| Ru | 3.5 | 3.5 | | | | | | |
| Nb | | | | | | | | |
| Ti | | | 0.9 | 0.9 | 0.9 | 0.9 | 0.9 | |
| Si | | | | | | | | |
| Ni | balance | balance | balance | balance | balance | balance | balance | balance |

**[Table 3]**

| Comparative Example | com.1H | com.1L | com.2H | com.2L |
|---|---|---|---|---|
| Spallation Life | 210 | 100 | 200 | 210 |
| Top Layer | YSZ | YSZ | YSZ | YSZ |
| Ni Bond Layer | | | | |
| Deposition Method | HVOF | LPPS | LPPS | LPPS |
| Pore Area Ratio | -- | 0.013 | 0.012 | 0.008 |
| | Alloy B | Alloy B | Alloy A | Alloy A |
| Co | 21.5 | 21.5 | 38.5 | 38.5 |
| Cr | 17 | 17 | 21 | 21 |
| Mo | | | | |
| W | | | | |
| Al | 12 | 12 | 8 | 8 |
| Ti | | | | |
| Ta | | | | |
| Hf | | | | |
| Y | 07 | 0.7 | 0.5 | 0.5 |
| Nb | | | | |
| Si | | | | |
| Ni | balance | balance | balance | balance |
| | | | | |
| Ni Substrate | | | | |
| Al | 5.9 | 5.9 | 5.9 | 5.9 |
| Ta | 5.9 | 5.9 | 5.9 | 5.9 |
| Mo | 2.9 | 2.9 | 2.9 | 2.9 |
| W | 5.9 | 5.9 | 5.9 | 5.9 |
| Re | 5.8 | 5.8 | 5.8 | 5.8 |
| Hf | 0.1 | 0.1 | 0.1 | 0.1 |
| Cr | 2.9 | 2.9 | 2.9 | 2.9 |
| Co | 5.8 | 5.8 | 5.8 | 5.8 |
| Ru | 3.5 | 3.5 | 3.5 | 3.5 |
| Nb | | | | |
| Ti | | | | |
| Si | | | | |
| Ni | balance | balance | balance | balance |

Fig. 4 shows micrographs of cross sections for comparing the degree of pore distribution in the microstructure of the cross section of the bond coat layer formed by coating with the bond coat material (BC-1) of the invention according to different coating methods.
The parts seen black correspond to the pores existing inside the bond coat layer. It is seen that the pores are small in the case of the low-pressure plasma spraying method (LPPS method) [Photograph A on the left side] as compared with those in the case of the high-velocity oxygen fuel spraying method (HVOF method) [Photograph B on the right side].
Based on the photographs of the cross sections of the bond coat layers, Fig. 5 shows the difference in the pore area per unit area depending on the combination of various types of bond coat materials and bond coating methods. As a result, it is known that, in the case of using the alloy of the invention, BC-1, the pore area per unit area is extremely small according to any coating methods. The microscopic characteristic of the alloy of the invention is considered to provide one reason for the extremely excellent heat cycle characteristics of the alloy of the invention as a bond coat material.

In the heat cycle test of the above-mentioned, three-layered Ni-based superalloy components, <Example 1 L> in which the bond coat material "BC-1" in Table 1 was formed into the bond coat layer according to the low-pressure plasma spraying method did not undergo coating film spallation in the first-try experiment up to 1300 cycles (see Fig. 2); and therefore, as the subsequent experiment, the heat cycle test of the sample was continued. The graph of [Fig. 6] shows the results.
In the graph of [Fig. 6], the fifth bar graph having a height of 2444 from the left shows that one sample of <Example 1L>, in which the "BC-1" bond coat material in [Table 1] was formed into the bond coat layer according to the low-pressure plasma spraying method, underwent coating film spallation after the life of 2444 cycles. The fourth bar graph having a height of 2098 from the left shows that another sample of <Example 1 L>, in which the "BC-1" bond coat material in [Table 1] was formed into the bond coat layer according to the low-pressure plasma spraying method, underwent coating film spallation after the life of 2098 cycles.
From the results of the two samples, it is obvious that the heat cycle life of the Ni-based superalloy component having the heat-resistant bond layer of the invention is sufficiently long and the reproducibility thereof is good.

For verifying the reason why the heat cycle life of the Ni-based superalloy component having the heat-resistant bond layer of the invention is sufficiently long, the present inventors compared the three-layered Ni-based superalloy component of the invention with comparative samples, after 300 cycles in the heat cycle test in point of the cross section of each sample, based on the enlarged SEM photographs of the boundary region between the substrate (1) and the bond coat layer (2).
As shown in [Fig. 7], it is recognized that, in all the samples of <Example 1 L> of the invention and <Comparative Example 1 L> and <Comparative Example 2L>, the secondary reaction zone (SRZ) (layer sandwiched between two lines in the center in each drawing) was formed at the boundary between the Ni-based superalloy substrate (1) (bottom layer in each drawing) and the bond coat layer (2) (top layer in each drawing).

The thickness of the SRZ layer in <Example 1 L> (bond coat material: BC-1) of the invention is from 20 to 30 µm or so, while the thickness of the SRZ layer in <Comparative Example 1 L> (bond coat material: CoNiCrAlY) and <Comparative Example 2L> (bond coat material: NiCoCrAlY) is from 130 to 160 µm or so and the layer is thick. It is known that, when the conventional bond coat materials (CoNiCrAlY, NiCoCrAlY) were used, various elements underwent mutual and active thermal diffusion between the substrate and the bond coat material, whereby the thick secondary reaction zone (SRZ) was formed.

On the other hand, when the Ni-based bond coat material of the invention was used, mutual diffusion of elements between the bond coat material and the Ni-based superalloy substrate (1) was retarded in the heat cycle test and therefore the composition, the morphology and the function of the bond coat layer could be sustained as such for a long period of time.

Subsequently, the present inventors gave in-depth consideration to the boundary region between the bond coat layer (2) and the top coat layer (3).
[Fig. 8] shows enlarged SEM photographs of the region of bond coat layer (2)/TGO (thermally-grown oxide)/top coat layer (3) of the cross section of each sample of three-layered Ni-based superalloy components after 300 cycles of the heat cycle test. <Example 1 L> [Photograph 8A], <Comparative Example 2L> [Photograph 8B] and <Comparative Example 1 L> [Photograph 8C] did not differ in that the dark TGO (thermally-grown oxide) formed in the boundary region between the bond coat layer (2) and the top coat layer (3) in all of these.
However, in <Example 1 L> [Photograph 8A], the bond coat layer (2)/TGO (thermally-grown oxide)/top coat layer (3) mutually adhered to each other with no indication of spallation.
When the bond coat material (BC-1) of the invention was used, the dense TGO (thermally-grown oxide) having good adhesiveness to other layers was seen after 300 cycles of the heat cycle test, and the layer having a thickness of 5 µm tended to be stable.
On the other hand, it is seen that, in <Comparative Example 1 L> (bond coat material: CoNiCrAlY) [Photograph 8C] and <Comparative Example 2L> (bond coat material: NiCoCrAlY) [Photograph 8B], TGO (thermally-grown oxide) was already thicker by from 1 to 2 µm or so than that in the present invention, after 300 cycles of the heat cycle test, and that in these Comparative Examples, TGO (thermally-grown oxide) itself was not dense and was poorly adhesive to the other layers, and there occurred some space between the TGO (thermally-grown oxide) and the bond coat layer (2), or that is, in these Comparative Examples, there was recognized an indication of spallation.
It is considered that the difference in the microstructure of TGO (thermally-grown oxide) formed in the interface between the bond coat layer and the top coat layer would be one contributory factor for the excellent characteristics of the bond coat material and the Ni-based superalloy component having the heat-resistant bond coat layer of the bond coat material of the invention.
In Fig. 8, the last [Photograph 8D] is an enlarged SEM photograph of the same region of <Example 1 L> after 1000 cycles of the heat cycle test. In this, it is confirmed that TGO (thermally-grown oxide) further grew to have wedge-shaped oxides stepping in the bond coat layer (2). The white arrows additionally given to the photograph are noted. It is considered that these would be a cause for increasing the adhesiveness between TGO and the bond coat layer.
These series of observation results relating to the TGO microstructure formed in the interface between the bond coat material and the top coat material obviously show the effectiveness of the invention.

## Claims

1. An Ni-based superalloy component having a three-layer configuration of an Ni-based superalloy substrate, a bond coat layer and a heat-resistant ceramic top coat layer having a thermal barrier function, wherein the alloy material of the bond coat layer has a composition including Co of at most 15.0% by mass, Cr of from 0.1 % by mass to 7.5% by mass, Mo of at most 3.0% by mass, W of from 4.1 % by mass to 10.0% by mass, Al of from 6.0% by mass to 10.0% by mass, Ti of at most 2.0% by mass, Ta of from 5.0% by mass to 15.0% by mass, Hf of at most 1.5% by mass, Y of at most 1.0% by mass, Nb of at most 2.0% by mass and Si of at most 2.0% by mass with a balance of Ni and inevitable impurities, and the Ni-based superalloy substrate has a composition including Al of from 1.0% by mass to 10.0% by mass, Ta of from 0% by mass to 14.0% by mass, Mo of from 0% by mass to 10.0% by mass, W of from 0% by mass to 15.0% by mass, Re of from 0% by mass to 10.0% by mass, Hf of from 0% by mass to 3.0% by mass, Cr of from 0% by mass to 20.0% by mass, Co of from 0% by mass to 20% by mass, Ru of from 0% by mass to 14.0% by mass, Nb of from 0% by mass to 4.0% by mass, Ti of from 0% by mass to 4.0% by mass and Si of from 0% by mass to 2.0% by mass with a balance of Ni and inevitable impurities.

2. An Ni-based superalloy component having a three-layer configuration of an Ni-based superalloy substrate, a bond coat layer and a heat-resistant ceramic top coat layer having a thermal barrier function, wherein the alloy material of the bond coat layer has a composition including Co of at most 12.0% by mass, Cr of from 0.1 % by mass to 6.0% by mass, Mo of at most 3.0% by mass, W of from 4.1 % by mass to 9.0% by mass, Al of from 6.5% by mass to 9.5% by mass, Ti of at most 2.0% by mass, Ta of from 5.0% by mass to 15.0% by mass, Hf of at most 1.5% by mass, Y of from 0.01 % by mass to 1.0% by mass, Nb of at most 2.0% by mass and Si of at most 2.0% by mass with a balance of Ni and inevitable impurities, and the Ni-based superalloy substrate has a composition including Al of from 3.5% by mass to 7.0% by mass, Ta of 2.0% by mass to 12.0% by mass, Mo of from 0% by mass to 4.5% by mass, W of from 0% by mass to 10.0% by mass, Re of from 0% by mass to 10.0% by mass, Hf of from 0% by mass to 0.50% by mass, Cr of from 1.0% by mass to 15.0% by mass, Co of from 0% by mass to 16% by mass, Ru of from 0% by mass to 14.0% by mass, Nb of from 0% by mass to 2.0% by mass, Ti of from 0% by mass to 3.0% by mass and Si of from 0% by mass to 2.0% by mass with a balance of Ni and inevitable impurities.

3. The Ni-based superalloy component according to claim 1, wherein the bond coat layer is formed according to a low-pressure plasma spraying method or a high-velocity oxygen fuel spraying method.

4. The Ni-based superalloy component according to claim 2, wherein the bond coat layer is formed according to a low-pressure plasma spraying method or a high-velocity oxygen fuel spraying method.

5. The Ni-based superalloy component according to claim 1, wherein the top layer includes a Zr oxide or a Hf oxide to which an oxide of a rare earth metal such as Y, La, Ga, Sm or the like or an Mg oxide is added.

6. The Ni-based superalloy component according to claim 2, wherein the top layer includes a Zr oxide or a Hf oxide to which an oxide of a rare earth metal such as Y, La, Ga, Sm or the like or an Mg oxide is added.

7. The Ni-based superalloy component according to claim 1, wherein the pore area of the bond coat layer is at most 5 µm² per 1000 µm².

8. The Ni-based superalloy component according to claim 2, wherein the bond coat layer is formed according to a low-pressure plasma spraying method, and the pore area of the bond coat layer is at most 3 µm² per 1000 µm².

9. A heat-resistant gas turbine component that includes the Ni-based superalloy component of any one of claims 1 to 10.
